# EUROPEAN PATENT APPLICATION

(11) **EP 2 508 442 A2**
(43) Date of publication of application: **10.10.2012**
(21) Application number: 12163137.8
(22) Date of filing: 04.04.2012
(51) Int. Cl.: B65D 43/02, B65D 51/16, B65D 53/02, B65D 81/26, B29C 45/16

(54) **Storage container**

(30) Priority: 04.04.2011 US 201161471491 P
(71) Applicant: Curver Luxembourg SARL, Neidercorn (LU)
(72) Inventor: Duvigneau, Nikolai, 30900 Zichron Yaacov (IL)
(74) Representative: Modiano, Micaela Nadia

(57) **Abstract**

A storage container (10) comprising a container body (12) having a wall portion (12a) and a bottom portion, the container body is configured for airtight storage of material. The storage container further comprising a lid member (14) for air-tightly covering the container body, the lid member having a channel defined about the perimeter thereof. A molded silicone seal (20) is mounted in the channel, and is configured to sealingly engage the upper perimeter of the wall portion when the lid is placed on the container body.

## Description

### FIELD OF THE SUBJECT MATTER

This presently disclosed subject matter relates to containers and more particularly to airtight storage containers.

### BACKGROUND

There are known containers for storage of products such as food and medications, which are typically configured to maintain freshness of the product stored therein. These containers are provided with a container body and a lid member configured to cover the container body. Some containers include a sealing arrangement providing an air-tight storage of the product stored therein.

### SUMMARY OF THE SUBJECT MATTER

According to one aspect of the presently disclosed subject matter, there is provided a storage container comprising a container body having a wall portion and a bottom portion, the container body configured for airtight storage of material; a lid member for air-tightly covering the container body, the lid member having a channel defined about the perimeter thereof; and a molded silicone seal mounted in the channel, being configured to sealingly engage the upper perimeter of the wall portion when the lid is placed on the container body.

The lid member can be a molded thermoplastic lid member.

The lid can further comprise pressure relief valve mounted thereon.

The storage container can further comprise a latching arrangement configured to secure the lid member to the wall portion. The latching arrangement can be configured to ensure sealing engagement between the silicone seal and the wall portion. The latching arrangement includes at least two latching flaps mounted on the lid member, being configured for snap fit engagement with a shoulder portion on the wall portion.

The silicone seal can include antibacterial component.

The wall portion can include a graduate scale having indicia.

The container body can further include a drainage channel defined about the perimeter of the bottom portion being configured for collecting liquid from the material stored inside the container body. The container body can include a plurality of grooves defined on the bottom portion thereof, which are in flow communication with the channel.

The lid member can further include a valve mounted therein and being configured for releasing pressure accumulated inside the container body, when the lid member is placed thereon. The valve can includes an aperture defined in the lid member for seating a valve stem, and at least one flow port, configured to allow flow of fluids from the container, the flow ports being sealed by a skirt disposed on the outside of the lid member and being coupled to the stem, and configured for radially outwardly deformation thereof in response to pressure accumulating inside the container.

According to another aspect of the presently disclosed there is provided a method for manufacturing a storage container configured for airtight storage of material, and having a container body and a lid member configured for covering the container body and having a channel defined about the perimeter thereof for receiving a wall portion of the container body, the method comprising: injecting a thermoplastic material into a first mold cavity having a shape corresponding to the container body, for forming the container body; injecting a thermoplastic material into a second mold cavity having a shape corresponding to the lid member for forming the lid member and the channel defined therein; and injecting a silicone material into the channel, thereby forming a silicone seal configured for sealing engagement with the wall portion of the container body when the lid member is placed thereon.

The silicone material can further include an antibacterial component configured for eliminating bacteria from inside the container body. The antibacterial component can be nano-silver particles.

The method can further include forming an aperture in the lid member, and mounting therein a valve configured for releasing pressure accumulated inside the container body, when the lid member is placed thereon. The aperture and the flow port can be formed in the injecting process of the led member.

The method can further include providing latching arrangement configured for securing the lid member to a wall portion of the container body.

The latching arrangement can include at least two latching flaps integrally formed on the lid member, being configured for snap fit engagement with a shoulder portion formed along the outside of the wall portion.

The latching flaps can be integrally formed with a hinge line in the form of a flexible portion, configured for pivoting latching flap thereabout. The hinge line can be a living hinge continuously or interruptedly formed along the flaps.

### BRIEF DESCRIPTION OF THE DRAWINGS

In order to understand the presently disclosed subject matter and to see how it can be carried out in practice, examples will now be described, by way of non-limiting examples only, with reference to the accompanying drawings, in which:
**Fig. 1a** is a perspective top view of a storage container according to an example of the presently disclosed subject matter in a sealed position;
**Fig. 1b** is a side view of the storage container of Fig. 1a;
**Fig. 2a** is a perspective top view of the storage container of Fig. 1a without a lid member;
**Fig. 2b** is a sectional side view of the storage container of Fig. 1a;
**Fig. 3** is a perspective bottom view of the storage container of Fig. 1a;
**Fig. 4** is a side view of a plurality of stackable storage containers according to an example of the presently disclosed subject matter in a sealed position;
**Fig. 5** is a top view of a plurality of stackable storage containers according to an example of the presently disclosed subject matter in a sealed position;
**Fig. 6** is a perspective bottom view of a lid member according to an example of the presently disclosed subject matter;
**Fig. 7a** is a perspective top view of a storage container according to an example of the presently disclosed subject matter in a sealed position;
**Fig. 7b** is a sectional side view of the storage container of Fig. 7a;
**Fig. 8a** is a perspective top view of a storage container according to an example of the presently disclosed subject matter without a lid member thereon;
**Fig. 8b** is a top view of the storage container of Fig. 8a; and,
**Fig. 8c** is a side sectional view of the storage container of Fig. 8a.

### DETAILED DESCRIPTION OF EMBODIMENTS

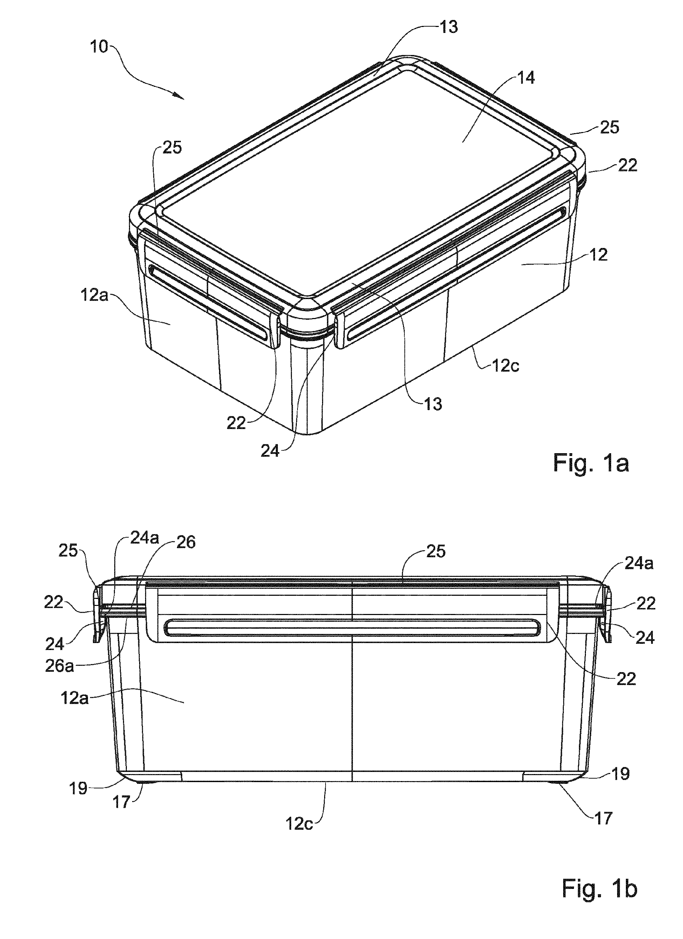

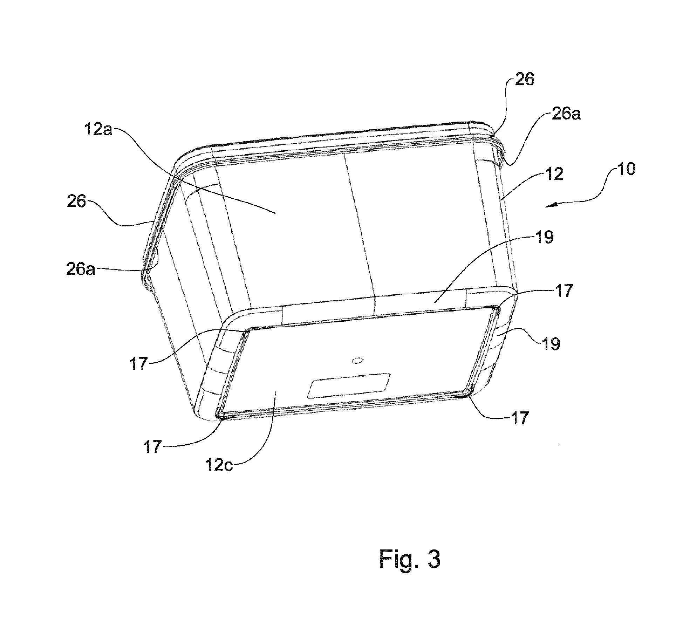

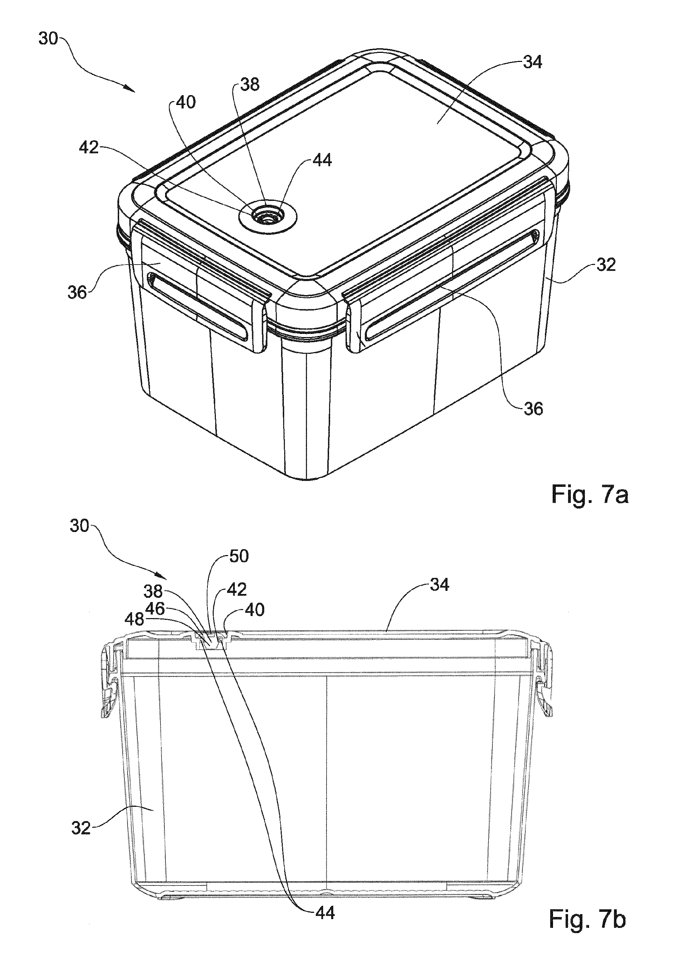

As illustrated in Figs. 1a to 3, there is provided a storage container **10,** having a container body **12,** here illustrated as a rectangular body, and a lid member **14** having a corresponding shape configured for covering container body **12.** Container body **12** includes a wall portion **12a,** and a bottom portion, defining an inside surface **12b,** as best seen in Figs. 7a and 7b, and an outside surface **12c,** as seen in Fig. 3. Wall portion **12a,** bottom portion, and lid member **14** are configured for airtight storage of material inside container **10.**

Lid member **14** includes at least two latching flap **22** pivotally mounted on the edge of lid member **14,** and configured for locking engagement with container body **12.** Preferably, lid member **14** includes a few latching flaps, so as to secure lid member **14** to container body **12** from all sides. In the illustrated example, the rectangular lid member **14** includes four latching flaps **22,** one on each side thereof, for securing to the four walls of the rectangular container body **12.** Latching flaps **22** includes a hinge line **25,** which can be a flexible portion (also known as living hinge or integral hinge) integrally formed in latching flap **22,** allowing for pivoting latching flap **22.** The hinge **25** can be continues along the flaps 22 or alternatively can be interrupted. According to the illustrated example, latching flaps **22** further include a longitudinal projection **24** having an upwardly protrusion **24a,** for locking engagement with wall portion **12a.**

Wall portion **12a,** on the other hand, includes an outwardly extending shoulder **26** defining a recess **26a** disposed between wall portion **12a** and shoulder **26.** Protrusion **24a** is configured for snap fit engagement with shoulder **26.**

Projection **24** can further include an ergonomically designed portion, here illustrated as a sloped portion **26b** defined substantially at the edge of latching flaps **22.** The other side projection **24** defining protrusion **24a** is disposed substantially at the center of latching flaps **22,** aligning with recess **26a.** Sloped portion **26b** provides space between latching flaps **22** and wall portion **12a,** thus allowing the user to insert the tips of his or her fingers in between, and to easily pull latching flaps **22** away from wall portion **12a,** so as to release protrusion **24a** from recess **26a.**

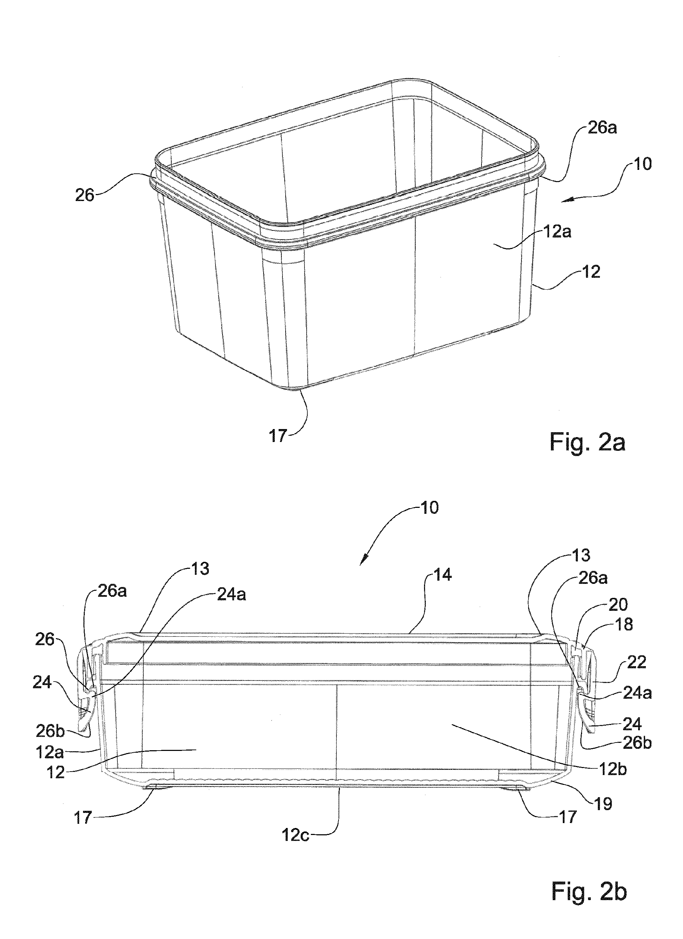

When lid member **14** is placed on container body **12,** latching flap **22** can be pivoted toward or away from wall portion **12a** to the secured or the unsecured position, respectively. Latching flap **22** can be pivoted toward wall portion **12a,** until protrusion **24a** abuts the lip of shoulder **26.** Further pushing latching flap **22** towards wall portion **12a,** urges protrusion **24a** inside recess **26a.** In this position, as best seen in Fig. 2b, protrusion **24a** is locked inside recess **26a** by the lip of shoulder **26,** thereby securing latching flaps **22** and lid member **14** to container body **12.**

Pulling latching flaps **22** away from wall portion **12a,** urges protrusion **24a** out of recess **26a,** thereby, releasing latching flaps **22** and lid member **14** from container body **12.**

It will be appreciated that projection **24** and protrusion **24a** can extend along the entire length of latching flap **22.** Alternatively, each latching flaps **22** can include one or more projections configured for snap-fit engagement with shoulder **26.** Similarly, shoulder **26** and recess **26a** can be defined around the entire perimeter of wall portion **12a.** Alternatively, wall portion **12a** can include one or more shoulder segments, each defining a recess **26a,** for example, if container body **12** is a rectangular body, as in the illustrated example, each side of wall portion **12a** can include one or more shoulder segments. It will be appreciated, that in the latter case, the projections defined on latching flaps **22** is aligned with the shoulder segment defined on wall portion **12a,** so as to allow locking engagement thereto.

It will be further appreciated that latching flap **22** and wall portion **12a** can include other locking arrangements, as known in the art. It will be further appreciated that container body **12** can be made in such a way which allows the user to selectively cover it with lid member **14** having latching flaps **22,** or alternatively, with lid member which does not include such latching flaps.

Still referring to Fig. la-3, container **10** can further include a stackable arrangement. For example, lid member **14** can include a raised rim portion **13,** here illustrated as a hump, defined about the outside periphery thereof. Outside surface **12c** of the bottom portion includes at least one, and preferably a few, leg members **17** defined in close proximity the periphery thereof, for stacking on a lid member of a second container. In order to allow retaining container **10** in place when disposed on a lid member of a second container, leg members **17** are disposed in such away so as to be substantially aligned with the inside of rim portion **13,** on the lid member **14.** This way, when a first container is placed on a lid member of a second container, leg members **17,** on the outside bottom portion **12c** of the first container, are disposed substantially adjacent raised rim portion **13** on the lid member **14** of second portion.

It will be appreciated that outside bottom portion **12c** can extend outwardly beyond leg members **17,** here illustrates as peripheral extension **19,** so as to maximize the space inside container **10.** However, in the latter case, peripheral extension **19** is slightly raised, substantially at the same height as the height of rim portion **13.** This way, when the first container is placed on the lid member of the second container, leg members **17** are bounded by rim portion **13,** and peripheral extension **19** is seated over rim portion **13,** thereby allowing container **10** to be evenly and horizontally seated on the lid member of the second container.

In the illustrated example, outside bottom portion **12c** includes four corner leg members **17,** one at each corner thereof. However, according to another example, the leg member can be a peripheral strip configured for bounding the inside of rim portion **13** and container **10** can be placed on another lid member. According to yet another example, rim portion **13,** can be defined on one or more segments of the periphery of lid member **14.** In this case, the leg members are defined at least on the segments of outside bottom portion **12c,** which is aligned with the rim portions, when placed on the lid member.

Accordingly, a plurality of containers can be stacked on one another, and the rim portion and the leg member thereof retain the containers on top of each other. The height of the rim portion and the leg members can be defined in accordance with the level of the required retention. That is to say, the heights of the rim portion and the leg members determine the maximum angle in which the stacked container can be disposed without slipping off one another.

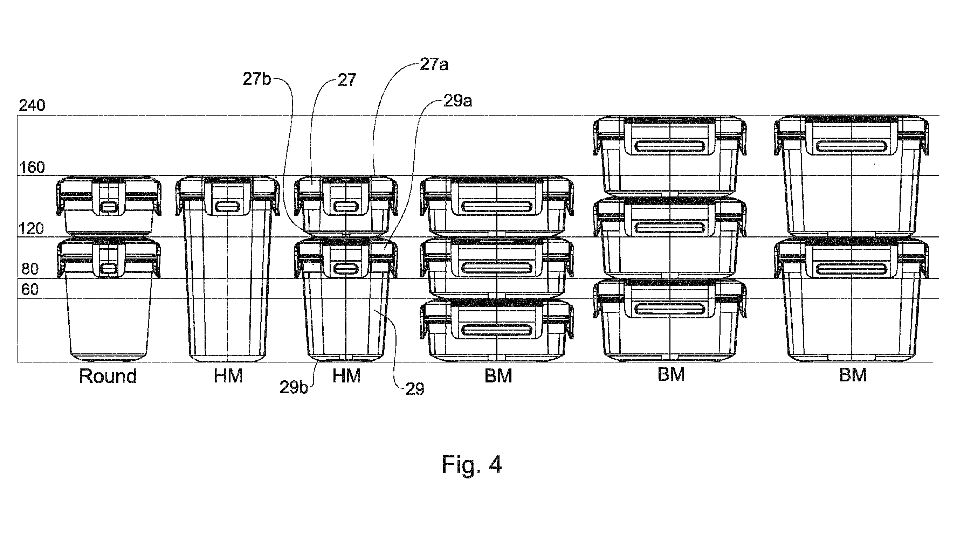

In reference to Fig. 4, a plurality of containers, substantially similar to container **10** of Figs. 1-3, can be stacked one on top of the other. There is provided in accordance with an example of the presently disclosed subject matter different series of containers, each series includes containers having similar dimension, which are configured to be stacked one on top of another. As seen in Fig. 4 container **27** has a different height than container **29,** however since the width and length of lid members **27a** and **29a** is substantially the same, as well as the width and length of outside bottom portions **27b** and **29b,** container **27** can be stacked on top of container **29** and vice versa.

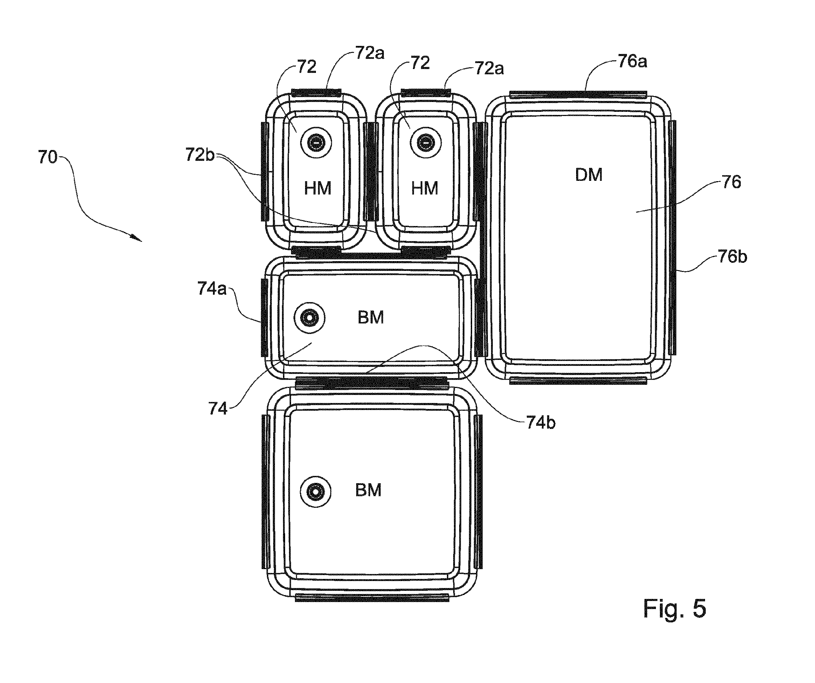

According to a further example, a series of stackable containers substantially the same as container **10** of Figs. 1-3, each having different dimensions can be provided. As seen in Fig. 5 a series of containers, generally indicated **70,** can include two small rectangular containers **72** having substantially the same width **72a** and length **72b.** In addition, a medium container **74** having larger width **74a** and length **74b** is provided. Width **74a** of medium container **74** is substantially the same as the length **72b** of small rectangular containers **72,** and length **74b** of medium container **74** is configured to hold the length **72b** of the two small rectangular containers **72.** Thus, small rectangular containers **72** can be disposed on medium container **74.** The rim portion defined on the lid member of medium container **74** is configured to engage at least some of leg members defined on the bottom portion of small rectangular containers **72.** Thus, two small rectangular containers **72** can be retained in place when stacked on medium container **74.**

Similarly, the series can include a large rectangular container **76,** having a large width **76a** and length **76b.** Width **76a** of large container **76** is configured to hold width **72a** of both small rectangular containers **72.** Length **76b** of large container **76** is configured to hold length **72b** of small rectangular containers **72** together with the width **74a** of medium container **74.** Thus, large rectangular container **76** is configured to hold two small rectangular containers **72,** as well as medium container **74.** The rim portion defined on the lid member of large container **76** is configured to engage at least some of leg members defined on the bottom portion of small rectangular containers **72** and medium container **74.** Thus, two small rectangular containers **72** and medium container **74,** can be retained in place when stacked on medium container **74.**

In addition, the containers in series **70** are nestable, that is to say, that each container can be nested inside similar container for efficient storage when the containers is not in use. The side walls of each container are slightly inclined sidewardly, in such a way that the circumference of the wall portion is slightly and gradually reduced from the top thereof toward the bottom thereof. This way, the bottom of each container can be inserted into a substantially similar container. It will be appreciated that a first container can be shoved into a second container, until the point along the wall portion of the second container where the circumference is substantially equal to the circumference of the bottom of the first container.

In order to facilitate the use of the container set **70,** each container can include an indication of its maximum capacity. The indication can be in any measurement system, such as liters, ounces etc, and it can be integrally formed with container, for example, on the wall portion or on its bottom. According to an example, the indication can be in Braille script, thus allowing blind user, to select the appropriate container.

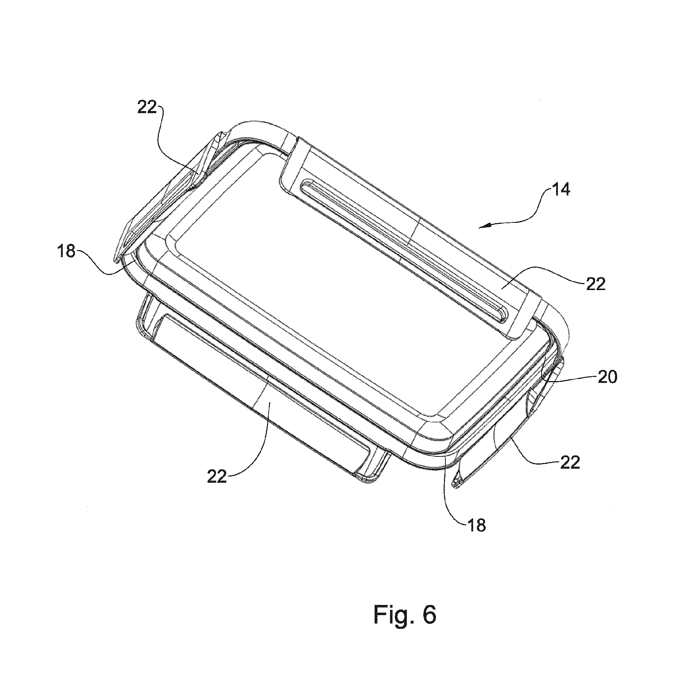

As seen in Fig. 6, the inside of lid member **14** includes a channel **18** defined about the perimeter thereof, configured for receiving the top of wall portion **12a.** Inside channel **18** there is provided a silicone seal **20** mounted therein (best seen in Fig 2b). Silicone seal **20** is integrally molded inside channel **18,** so as to preclude displacement thereof. This is particularly useful when vacuum is created inside container body **12,** thus, sometimes causing silicone seal **20** to be forced out of channel **18.** In addition, integrally molding silicone seal **20** with lid member **14** substantially prevents the formation of gaps and spaces between the seal and the channel, in which bacteria can grow and accumulate. Silicone seal **20** can include antibacterial component for eliminating bacteria and/or fungal, such as antibacterial nano silver particles, as known in the art. When lid member **14** is placed on container body **12,** the top of wall portion **12a** is inserted into channel **18,** while sealingly engaging silicone seal **20.** Thus, the inside space of container body **12** is sealed, and the marital therein can be air-tightly stored. It is appreciated that the lid member can be molded thermoplastic member, integrally formed with a channel into which the silicone seal is injected.

According to one example, silicone seal **20** is integrally molded into channel **18** during the formation process of lid member **14.** This can be carried out by injecting a thermoplastic material into a first mold cavity having a shape corresponding to a desired container body, thereby forming the container body. In addition, injecting a thermoplastic material into a second mold cavity having a shape corresponding to a desired lid member with a channel defined about the perimeter thereof for receiving a wall portion of the container body, when the lid member is placed thereon. Finally, injecting a silicone material into the channel, thereby forming a silicone seal configured for sealing engagement with the wall portion of the container body when the lid member is placed thereon.

Alternatively, silicone seal **20** is molded into a channel of an existing lid member. It is further appreciated that the container includes latching arrangement for securing the lid member to the wall portion of the container. The latching arrangement can include for example latching flaps on the lid member for securely engaging a shoulder defined on the wall portion of the container. It is appreciated that alternatively the latching flaps can be provided on the wall portion, and configured to securely engage a shoulder portion is provided on the lid member.

In any case, the latching arrangement is configured to secure the lid member to the wall portion, and in addition to ensure sealing engagement between the silicone seal and the wall portion.

Referring now to Fig. 7a, there is provided according to an example of the presently disclosed subject matter, a storage container generally indicated **30.** Storage container **30,** is substantially the same as storage container **10** of Fig. 1a, and includes a container body **32,** and a lid member **34** having a plurality of latching flaps **36** for securing thereof to container body **32.** Storage container **30** further includes a valve **38** for releasing pressure accumulated therein. Valve **38** is a check valve allowing flow in one direction, thus, allowing fluids, such as gas, and vapor to escape container **30,** while blocking air and other fluids from entering container **30.** In the illustrated example, valve **38** is an umbrella valve, also known as a "mushroom valve". It will be appreciated that the valve can be any other valve suitable for unidirectional flow, such as allowing fluid to escape the container, while stopping fluids from outside the container to enter therein. The valve allows steam accumulated in the container to escape there from, this way, food products can be heated and cooked while being air-tightly stored in the container. It is appreciated that the storage container **30** can further include a silicone seal **35** molded into the perimeter of its lid for sealingly engaging the wall portion of the container, as described herein above with regards to Fig. 7a. The silicone seal **35** provides an air-tightly space inside the container when the lid is placed thereon. The valve on the other hand allows gases inside the container, for example, gases emitted from the foods contained inside the container, to be released.

As best seen in Fig. 7b, valve **38** includes a seat **40** having an aperture **42** for seating a valve stem, and at least one, and preferably a plurality of flow ports **44,** configured to allow flow of fluids from container **30.** In addition, valve **38** includes a skirt **46** for sealing flow ports **44,** and a stem **48** coupled to the bottom of skirt **46,** and seated in aperture **42.** (The valve in Fig. 7a is shown without the stem **48** and the skirt **46)** Skirt **46** is made of an elastic material which can be deformed as a result of pressure inside container **30,** and includes a shape substantially corresponding to the contour of seat **40,** thus sealing all of flow ports **44.** Steam **42** includes a retaining knob **44** having a circumference larger than the size of aperture **42,** thus retaining stem **48** inside aperture **42.**

According to the illustrated example, seat **40** includes a circular shape, and skirt **46** includes a circular shape having a diameter slightly smaller than the diameter of seat **40.** Aperture **42** is defined substantially at the center of seat **40,** and flow ports **44** are defined around aperture **42.** Stem **48** is mounted, and preferably integrally formed, at the center of skirt **46.** This way, when steam **48** is mounted inside aperture **42,** the periphery of skirt **46** covers and seals flow ports **44.** Skirt **46** further includes a bore **50** substantially at the center thereof, which can extend into steam **48.** Bore **50,** allows for radially outwardly deformation of skirt **46,** thereby unsealing flow ports **44.** It will be appreciated that bore **50** is not opened to the inside of container **30,** thus, does not allow for flow of fluids therefrom.

When the pressure inside container **30** is higher than the pressure outside thereof, the periphery of skirt **46** is slightly lifted from seat **40,** thereby unsealing one or more flow ports **44,** thus, allowing flow of fluids, such as gas and vapor, from container **30.** It will be appreciated that the amount of pressure required to deformed skirt **46** thereby unsealing flow ports **44,** can be predefined. This can be carried out by selecting the martial and shape of skirt **46** thereby defining the flexibility of its periphery.

Valve **38** can be defined on lid member **34,** as in the illustrated example, or alternatively can be defined on container body **32.** It will be appreciated that container body **32** can made in such a way which allows the user to selectively cover it with lid member **34** having a valve **38,** or alternatively, with lid member which does not include a valve **38,** such as lid member **14** of Figs. 1a-3.

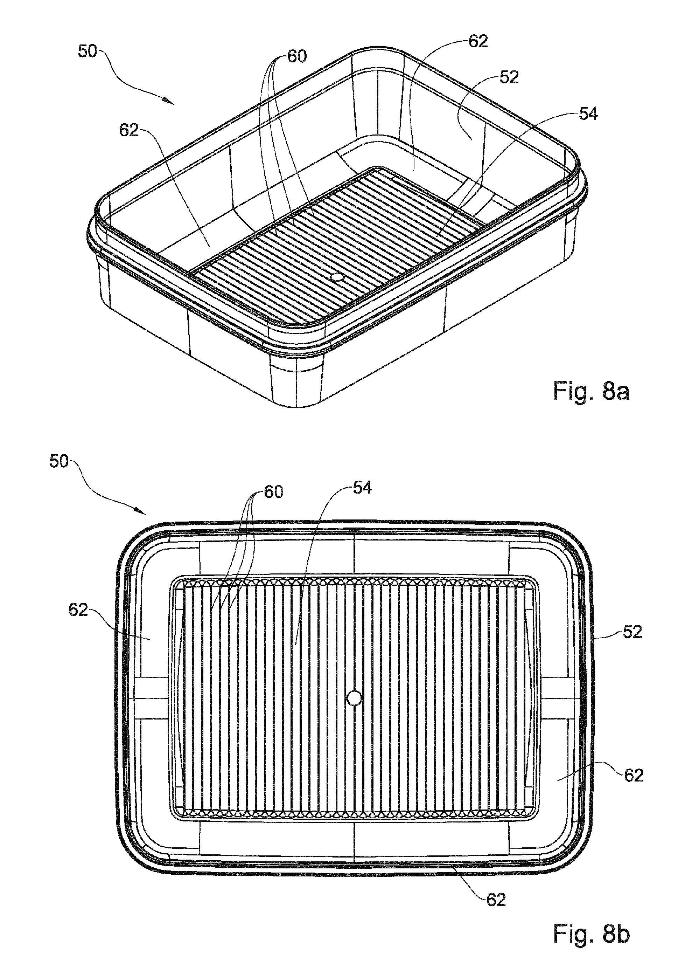

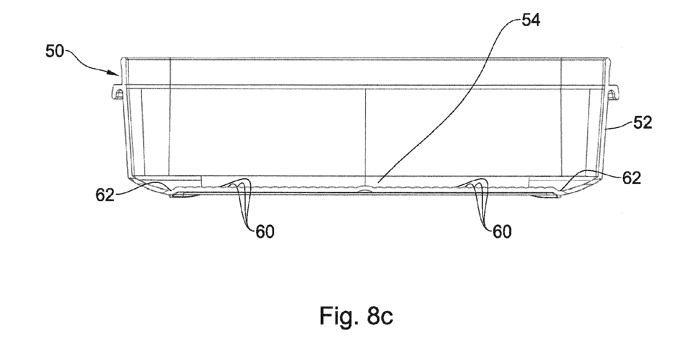

Referring now to Figs. 8a to 8c, there is provided according to an example of the presently disclosed subject matter, a storage container generally indicated **50.** Storage container **50** includes a wall portion **52,** here illustrated as a rectangular wall, and a bottom portion **54,** defining the inside bottom of container **50.** Bottom portion **54** includes a plurality of ridges **60** for receiving liquids dripped and/or extracted from the material contained in container **50.** Bottom portion **54** can further include a drainage channel **62** defined about at least a portion of the perimeter of bottom portion **54,** for receiving liquids collected in ridges **60.** Drainage channel **62** is in flow communication with ridges **60,** and can be deeper than ridges **60,** so as to allow liquids from ridges **60** to gravitate therein. This way, the material in container **50** is disposed substantially on top of ridges and is substantially separated from the liquids, which is drained into ridges **60** and drainage channel **62.** This can be particularly useful when container **50** contains food products, which can get spoiled when soaked in liquid.

According to an example of the invention, the container further includes volume markings for measuring the volume of the contents inside the container. The volume markings can be in accordance with any volume measurement system, such as liter, ounces etc. The markings are preferably integrally formed on the wall portion of the container, alternatively, the markings can be carved, printed or glued to the container.

## Claims

1. A storage container comprising:
a container body having a wall portion and a bottom portion, said container body is configured for airtight storage of material;
a lid member for air-tightly covering said container body, said lid member having a channel defined about the perimeter thereof; and
a molded silicone seal mounted in said channel, being configured to sealingly engage the upper perimeter of said wall portion when said lid is placed on said container body.

2. The storage container of claim 1 wherein said lid further comprising pressure relief valve mounted thereon.

3. The storage container of claims 1 or 2 further comprising latching arrangement configured to secure said lid member to said wall portion.

4. The storage container of claim 3 wherein said latching arrangement is configured to tightly secure said lid member to said wall portion thereby sealingly engaging said upper perimeter of said wall portion with said silicone seal.

5. The storage container of claim 3 or 4 wherein said latching arrangement includes at least two latching flaps mounted on said lid member, being configured for snap fit engagement with a shoulder portion defined along the outside of said wall portion.

6. The storage container of any one of the previous claims wherein said silicone seal includes antibacterial component.

7. The storage container of any one of the previous claims wherein said wall portion include a graduate scale having indicia.

8. The storage container of any one of the previous claims wherein said container body further includes a drainage channel defined about the perimeter of said bottom portion being configured for collecting liquid from the material stored inside said container body.

9. The storage container of claim 8 wherein said container body further comprises a plurality of grooves defined on said bottom portion, said grooves being in flow communication with said drainage channel.

10. The storage container of any one of the previous claims wherein said lid member further includes a valve mounted therein and being configured for releasing pressure accumulated inside said container body, when said lid member is placed thereon.

11. A method for manufacturing a storage container configured for airtight storage of material, and having a container body and a lid member configured for covering the container body and having a channel defined about the perimeter thereof for receiving a wall portion of the container body, the method comprising:
injecting a thermoplastic material into a first mold cavity having a shape corresponding to the container body, for forming the container body;
injecting a thermoplastic material into a second mold cavity having a shape corresponding to the lid member for forming the lid member and the channel defined therein; and
injecting a silicone material into the channel, thereby forming a silicone seal configured for sealing engagement with the wall portion of the container body when the lid member is placed thereon.

12. The method of claim 11 wherein said silicone material further includes antibacterial component configured for eliminating bacteria from inside the container body.

13. The method of claim 12 wherein said antibacterial component is nano-silver particles.

14. The method of any one of claims 11 to 13 further comprising forming an aperture in the lid member, and mounting therein a valve configured for releasing pressure accumulated inside the container body, when the lid member is placed thereon.

15. The method of any one of claims 11 to 14 further comprising providing latching arrangement configured for securing the lid member to a wall portion of the container body.
